# EUROPEAN PATENT SPECIFICATION

(11) **EP 4 435 415 B1**
(45) Date of publication and mention of the grant of the patent: **26.08.2026**
(21) Application number: 22911932.6
(22) Date of filing: 21.12.2022
(51) Int. Cl.: G06N 3/08, H01M 10/42, G06T 7/00, G01N 23/04

(54) **BATTERY CELL TEST SYSTEM AND METHOD**
BATTERIEZELLENTESTSYSTEM UND -VERFAHREN
SYSTÈME ET PROCÉDÉ DE TEST D'ÉLÉMENTS DE BATTERIE

(30) Priority: 22.12.2021 KR 20210185151
(43) Date of publication of application: 25.09.2024
(73) Proprietor: LG Energy Solution, Ltd., Seoul 07335 (KR)
(72) Inventor: KIM, Tae Hee, Daejeon 34122 (KR); JUNG, Ha Yong, Daejeon 34122 (KR)
(74) Representative: Plasseraud IP
(86) International application number: PCT/KR2022/020970
(87) International publication number: WO 2023/121299

(56) References cited:
- CN-A- 113 129 260
- KR-A- 20160 067 024
- KR-A- 20190 126 524
- KR-A- 20190 128 111
- KR-B1- 102 206 908
- KR-B1- 102 312 730
- US-B2- 8 596 866
- PIETSCH PATRICK ET AL: "X-Ray Tomography for Lithium Ion Battery Research: A Practical Guide", ANNU. REV. MATER. RES., vol. 47, 3 April 2017 (2017-04-03), pages 451 - 479, XP093237815, DOI: 10.1146/annurev-matsci-070616-123957

## Description

### [TECHNICAL FIELD]

### CROSS-REFERENCE TO RELATED APPLICATION

This application claims priority to and the benefit of Korean Patent Application No. 10-2021-0185151 filed in the Korean Intellectual Property Office on December 22, 2021.

### TECHNICAL FIELD

Embodiments disclosed herein relate to a battery cell inspection system and method.

### [BACKGROUND ART]

With the recent rapid development of electrical, electronics, communication, and computer industries, the demand for high-performance and high-safety batteries is gradually increasing. A lithium polymer battery, a type of secondary batteries, is a battery capable of repeating charge and discharge through reversible interconversion between chemical energy and electrical energy, and has been used variously for portable electronic devices, electric vehicle batteries, etc., due to the advantages of long life and large capacity.

Generally, an electrode assembly of a lithium polymer battery has a structure in which a plurality of positive electrodes and negative electrodes are alternately stacked with separators therebetween. To prevent the precipitation of lithium, the negative electrode may have a large area enough to cover the positive electrode, in which a protruding portion of the negative electrode is referred to as an overhang. When an overhang portion is bent or protrudes too much, or some electrode is missing due to a problem in a manufacturing process, it may lead to a defect of a battery and thus require a process of inspecting an electrode through internal CT scan. However, in an existing battery cell inspection system, an inspector observes an image of an inspection object with the naked eyes to determine a defect, making it difficult to perform total inspection due to a long time taken and resulting in a limitation in reducing a defect rate merely with sampling inspection.
Document CN 113 129 260 A discloses a method and device for automatically detecting internal defects of lithium battery cell based on a machine vision technology.

### [DISCLOSURE]

### [TECHNICAL PROBLEM]

Embodiments disclosed herein aim to a battery cell inspection system and method in which an electrode endpoint is tracked in a battery cell image using an artificial intelligence learning model and it is automatically determined based thereon whether an electrode is defective.

Technical problems of the embodiments disclosed herein are not limited to the above-described technical problems, and other unmentioned technical problems would be clearly understood by one of ordinary skill in the art from the following description.

### [TECHNICAL SOLUTION]

A battery cell inspection system according to claim 1 is disclosed.

In the battery cell inspection system according to an embodiment, the learning model may be generated by receiving learning data including an electrode image of a battery cell, labelling the learning data, extracting a feature based on the labelled learning data, and developing a database where the feature is recorded.

In the battery cell inspection system, the photographing unit includes a radiation source configured to output radiation toward a region of interest of the battery cell and a radiation detector configured to detect radiation penetrating the region of interest of the battery cell.

In the battery cell inspection system according to an embodiment, the photographing unit may be further configured to obtain a three-dimensional image for the region of interest of the battery cell, and the controller may be further configured to generate cross-sectional images for two or more directions based on the three-dimensional image and track an electrode endpoint of the battery cell for each of the cross-sectional images, and the learning model may be trained using cross-sectional images for two or more directions, generated based on a three-dimensional image, as learning data.

In the battery cell inspection system according to an embodiment, an electrode of the battery cell may include a structure where a plurality of positive electrodes and a plurality of negative electrodes are alternately stacked with separators therebetween, and the controller may be further configured to determine that the electrode of the battery cell is defective, in at least one of a case where some positive electrode or negative electrode is bent, a case where some positive electrode or negative electrode is missing, a case where a gap between endpoints of adjacent positive electrode and negative electrode is equal to or greater than a reference value, a case where an insertion order of a positive electrode or a negative electrode is reversed, a case where a gap between endpoints of adjacent positive electrodes or a gap between endpoints of adjacent negative electrodes is equal to or greater than a reference value, a case where a parameter indicating an alignment state of a positive electrode and a negative electrode in a specific section is equal to or less than a reference value, and a case where some positive electrode or negative electrode is disconnected.

The battery cell inspection system according to an embodiment may further include a tray on which two or more battery cells are loaded and a transferring unit configured to transfer the tray on which the battery cells are loaded, to a photographing point of the photographing unit, and transfer the tray out of the photographing point upon completion of photographing.

In the battery cell inspection system according to an embodiment, the transferring unit may be further configured to simultaneously transfer two or more trays on which the battery cells are loaded, to the photographing point, and the two or more trays may be arranged such that the radiation output from the radiation source penetrates regions of interest of the battery cells loaded on all of the trays at the same time.

In the battery cell inspection system according to an embodiment, the two or more trays may be arranged such that corners of the battery cells loaded on each tray face corners of the battery cells loaded on another tray, in the photographing point.

In the battery cell inspection system according to an embodiment, the transferring unit may be further configured to rotate the tray on which the battery cells are loaded, with respect to an axis in the photographing point, and the photographing unit may be further configured to obtain a three-dimensional image of the battery cell based on a two-dimensional radiation image obtained during rotation of the tray.

A battery cell inspection method according to claim 9 is disclosed.

In the battery cell inspection method according to an embodiment, the learning model may be generated by receiving learning data including an electrode image of a battery cell, labelling the learning data, extracting a feature based on the labelled learning data, and developing a database where the feature is recorded.

In the battery cell inspection method according to an embodiment, the obtaining of the electrode image of the battery cell may include outputting radiation toward a region of interest of the battery cell and detecting radiation penetrating the region of interest of the battery cell.

In the battery cell inspection method according to an embodiment, the obtaining of the electrode image of the battery cell may include obtaining a three-dimensional image for the region of interest of the battery cell, and the tracking of the electrode endpoint of the battery cell may include generating cross-sectional images for two or more directions based on the three-dimensional image and tracking the electrode endpoint of the battery cell for each of the cross-sectional images, and the learning model may be trained using cross-sectional images for two or more directions, generated based on a three-dimensional image, as learning data.

In the battery cell inspection method according to an embodiment, an electrode of the battery cell may include a structure where a plurality of positive electrodes and a plurality of negative electrodes are alternately stacked with a separator therebetween, and the battery cell inspection method may further include determining that the electrode of the battery cell is defective, in at least one of a case where some positive electrode or negative electrode is bent, a case where some positive electrode or negative electrode is missing, a case where a gap between endpoints of adjacent positive electrode and negative electrode is equal to or greater than a reference value, a case where an insertion order of a positive electrode or a negative electrode is reversed, a case where a gap between endpoints of adjacent positive electrodes or a gap between endpoints of adjacent negative electrodes is equal to or greater than a reference value, a case where a parameter indicating an alignment state of a positive electrode and a negative electrode in a specific section is equal to or less than a reference value, and a case where some positive electrode or negative electrode is disconnected.

The battery cell inspection method may further include loading two or more battery cells on a tray, transferring the tray on which the battery cells are loaded, to a photographing point, and transferring the tray out of the photographing point upon completion of photographing.

In the battery cell inspection method according to an embodiment, the transferring of the tray to the photographing point may include simultaneously transferring two or more trays on which the battery cells are loaded, to the photographing point, and the two or more trays may be arranged such that the radiation penetrates regions of interest of the battery cells loaded on all of the trays at the same time.

In the battery cell inspection method according to an embodiment, the two or more trays may be arranged such that corners of the battery cells loaded on each tray face corners of the battery cells loaded on another tray, in the photographing point.

The battery cell inspection method according to an embodiment may further include rotating the tray on which the battery cells are loaded, with respect to an axis in the photographing point, in which the obtaining of the electrode image of the battery cell may include obtaining a three-dimensional image of the battery cell based on a two-dimensional radiation image obtained during rotation of the tray.

### [ADVANTAGEOUS EFFECTS]

Embodiments disclosed herein aim to describe a battery cell inspection system and method in which an electrode endpoint may be tracked in a battery cell image using an artificial intelligence learning model and a defect of an electrode may be automatically determined based on the tracked electrode endpoint.

According to the proposed system and method, by simultaneously obtaining electrode images of several stacked battery cells and automatically inspecting an electrode of each battery cell by using a learning model, a time required for inspection may be largely reduced. Thus, unlike existing sampling inspection, total inspection may be possible and thus a risk corresponding to a defect of a product may be greatly reduced.

Moreover, various effects recognized directly or indirectly from the disclosure may be provided.

### [DESCRIPTION OF DRAWINGS]

In order to more clearly describe technical solutions of embodiments disclosed herein or the prior art, the drawings required in the description of the embodiments are briefly introduced below. It should be understood that the following drawings are for the purpose of explaining the embodiments of the present specification and not for limiting purposes. In addition, representations of some components in the drawings may be exaggerated or omitted for clarity of explanation.
FIG. 1 shows a configuring and operating process of a battery cell inspection system according to an embodiment.
FIG. 2 shows a photographing region-of-interest of a battery cell and an inspection direction along an x axis/y axis, according to an embodiment.
FIG. 3A shows a two-dimensional (2D) image, obtained through X-ray photography, of an internal electrode of a battery cell.
FIG. 3B shows a cross-sectional image generated based on a three-dimensional (3D) image, obtained through X-ray photography, of an internal electrode of a battery cell.
FIGS. 4A to 4G illustrate a case where each battery cell electrode is determined to be defective.
FIG. 5 shows arrangement structures of a tray and a battery cell to simultaneously inspect multiple battery cells.
FIG. 6 is a flowchart showing a battery cell inspection method according to an embodiment.
FIG. 7 is a flowchart showing a battery cell inspection method according to another embodiment.

### [MODE FOR INVENTION]

Hereinafter, embodiments disclosed in this document will be described in detail with reference to the exemplary drawings. In adding reference numerals to components of each drawing, it should be noted that the same components are given the same reference numerals even though they are indicated in different drawings. In addition, in describing the embodiments disclosed in this document, when it is determined that a detailed description of a related known configuration or function interferes with the understanding of an embodiment disclosed in this document, the detailed description thereof will be omitted.

Although terms used herein are selected with general terms popularly used at present under the consideration of functions in the disclosure, the terms may vary according to the intention of those of ordinary skill in the art, custom, or introduction of new technology. In addition, in a specific case, the applicant voluntarily may select terms, and in this case, the meaning of the terms may be disclosed in a corresponding description part of the present specification. Therefore, the terms used herein should be defined not by the simple names of the terms but by the substantial meaning of the terms and the contents throughout the disclosure. Moreover, terms defined in the present disclosure are used for only describing a specific exemplary embodiment and may not have an intention to limit the scope of other exemplary embodiments. It is to be understood that the singular forms include plural references unless the context clearly dictates otherwise.

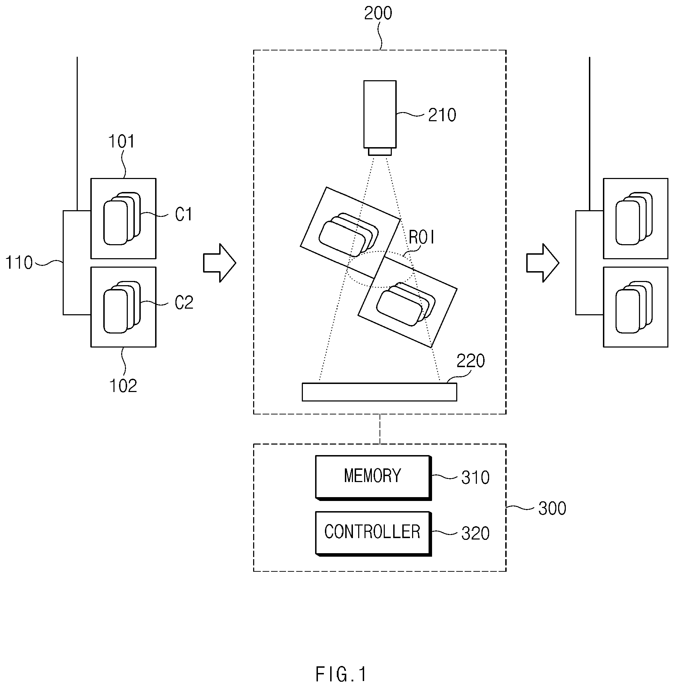

FIG. 1 shows a configuring and operating process of a battery cell inspection system according to an embodiment. Referring to FIG. 1, a battery cell inspection system according to an embodiment may include trays 101 and 102 having two or more battery cells C1 and C2 loaded thereon, a transferring unit 110 for transferring the trays 101 and 102, a photographing unit 200 for obtaining electrode images of the battery cells C1 and C2, and an inspection unit 300 for tracking electrode endpoints of the battery cells C1 and C2 and determining whether electrodes are defective based thereon.

A battery cell is a minimum unit constituting a rechargeable secondary battery, and may be manufactured through a process of packaging an electrode assembly, an activating process of activating a battery by charging and discharging the battery having passed through the packaging process, a degassing process of discharging a gas from a battery cell, and a folding process of cutting a part of a pouch and sealing the pouch.

The electrode assembly may be manufactured through a notching process of making positive electrode and negative electrode tabs of the battery, a stacking process of stacking a battery material, and a tab welding process of welding the positive electrode and negative electrode tabs. A general electrode structure has a structure in which a single positive electrode sheet or a plurality of positive electrode sheets where a positive electrode active material is formed on a positive electrode current collector and a single negative electrode sheet or a plurality of negative electrode sheets where a positive electrode active material is formed on a negative electrode current collector are alternately stacked, and the positive electrode sheet and the negative electrode sheet may face each other with a separator sheet therebetween. In this case, to prevent the precipitation of lithium, the negative electrode may have a large area enough to cover the positive electrode, in which when the protruding portion of the negative electrode is bent, a gap with the positive electrode is too large, or some electrode is missing, it may lead to a defect of the battery cell and thus it is determined through a separate inspection process whether the electrode is defective.

The two or more battery cells C1 and C2 may be respectively loaded on the trays 101 and 102. To inspect corner portions of the several battery cells C1 and C2 at the same time, the battery cells may be loaded exactly on top of each other and the trays 101 and 102 may have loading spaces respectively equal to the sizes of the battery cells C1 and C2.

The transferring unit 110 may transfer the trays 101 and 102 loaded on the battery cells C1 and C2 to a photographing point, and upon completion of photographing, transfer the trays 101 and 102 out of the photographing point. According to an embodiment, the transferring unit 110 may transfer the trays 101 and 102 to a designated position after being coupled to engagement potions (not shown) of the trays 101 and 102 through vacuum adsorption (or using a gripper). According to another embodiment, the transferring unit 110 may be a conveyor belt for carrying the trays 101 and 102. In this case, the transferring unit 110 may carry the trays 101 and 102 on a moving stage of the conveyor belt in set speed and direction, without being coupled to the trays 101 and 102.

The photographing unit 200 may photograph regions of interest (ROI) of the battery cells C1 and C2, transferred by the transferring unit 110, to obtain electrode images. Herein, the region of interest may be a corner portion where an electrode of each battery cell is located. According to claim 1, the photographing unit 200 includes a radiation source 210 that outputs radiation toward a region of interest of the battery cell and a radiation detector 220 that detects radiation having penetrated the region of interest.

The radiation source 210 may be an X-ray tube having a capacity of about 160 to about 240 kV. The X-ray tube may be, for example, a hot-cathode x-ray tube that emits X rays by colliding with a material after creating an electron beam moving at high speed using a heated tungsten filament.

The radiation detector 220 may detect X rays and reconstruct an image by using X-ray information. As shown in FIG. 1, the radiation detector 220 may be located on the opposite side of the radiation source 210 with respect to an inspection target battery cell to detect X rays penetrating the region of interest of the battery cell and reconstruct them as an image.

The battery cells C1 and C2 may be transferred to a photographing point located between the radiation source 210 and the radiation detector 220 (i.e., a position where radiation emitted from the radiation source 210 passes a corner electrode portion of the battery cell). According to an embodiment, to locate the battery cells C1 and C2 at an exact photographing point, the position of the transferring unit 110 coupled to the trays 101 and 102 may be manually or automatically fine-adjusted. According to another embodiment, the positions of the trays 101 and 102 and the transferring unit 110 may be fixed, and the position of the radiation source 210 may be manually or automatically fine-adjusted.

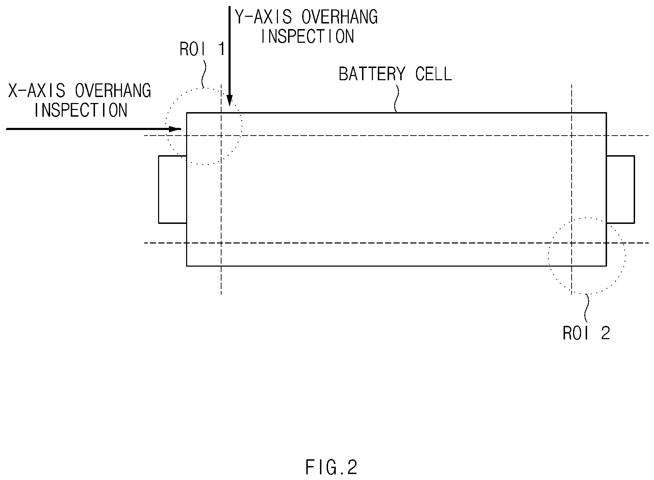

FIG. 2 shows a photographing region of interest of a pouch-type battery cell and an inspection direction along an x axis/y axis, according to an embodiment. For the pouch-type battery cell, an overhang where a negative electrode protrudes relative to a positive electrode is observed in a corner portion, such that the corner portion may be set as regions of interest ROI 1 and ROI 2. Although not shown, for a prismatic battery cell or cylindrical battery cell, another portion where an overhang may be observed may be set as a region of interest to obtain an electrode image.

The electrode images of the battery cells C1 and C2 obtained by the photographing unit 200 may be delivered to the inspection unit 300. Referring to FIG. 1, the inspection unit 300 includes a memory 310 that stores a learning model trained to track an electrode endpoint in an electrode image of a battery cell and a controller 320 that determines whether an electrode is defective by using the learning model.

The memory 310 may be various storage media such as a semiconductor memory like random-access memory (RAM), read-only memory (ROM), flash memory, etc., and a magnetic disk, an optical disk, etc. The learning model stored in the memory 310 is an artificial intelligence machine learning model trained to track an electrode endpoint in an electrode image of a battery cell, and may be, for example, a deep learning model having a multi-layer artificial neural network structure.

A process of generating and training a learning model according to an embodiment is as described below. Learning data including an electrode image of a battery cell may be input, and the learning data may be labelled as a learning base task for tracking an electrode endpoint. Labelling may refer to a process of inputting various information serving purposes to enable artificial intelligence to learn data such as images, video, texts, etc., into each data. Each labelled data may be stored as points to constitute learning data. A feature may be extracted based on the labelled learning data, and a database in which the feature is recorded may be structured to match the feature to a feature of input data, thereby generating a learning model. The learning model may undergo a process of receiving a battery cell electrode image as input data and extracting a feature of each input data for comparison, and matching the extracted feature to a feature of a previously generated database to optimize a shape of an object having a high matching rate.

The controller 320 tracks an electrode endpoint in an electrode image of a battery cell by using the learning model stored in the memory 310 and determine whether an electrode of the battery cell is defective, based on coordinate information of the electrode endpoint. The controller 320 may include a processor that processes data and performs an operation, such as a CPU, an MPU, an MCU, etc.

An example electrode endpoint tracking process using the learning model is as described below. First, a preprocessing process of input image data may be performed. For example, an input image may be converted into a high-quality image by using a deep learning-based high-resolution algorithm. Next, in a shape detection stage, the high-quality image may be segmented to detect endpoints of a negative electrode and a positive electrode. Next, a skeleton model may be extracted from the shape of the endpoint detected through segmentation, and disconnected and connected portions may be post- processed to extract contour information. Through such a series of processes, the controller 320 may track coordinates of the electrode endpoint in the input image and determine whether the electrode is defective, based on the coordinate information.

According to an embodiment, the battery cell inspection system may perform inspection based on a 3D image obtained by photographing the electrode of the battery cell. According to an embodiment, the transferring unit 110 may rotate a tray on which inspection target battery cells are loaded, by 360 degrees with respect to an axis in the photographing point, and the photographing unit 210 may generate a 3D image based on a tomographic image captured during rotation of the tray and the battery cells. A computed tomography (CT) technique may be used as a 3D imaging scheme, in which a tomographic image may be obtained by transmitting X rays while rotating a battery cell, and a 3D image may be obtained by reconstructing multiple tomographic images.

According to an embodiment, the controller 320 may generate cross-sectional images for two or more directions (e.g., an x-axis direction cross-sectional image and a y-axis direction cross-sectional image) based on the 3D image, and track an electrode endpoint for each cross-sectional image by using a learning model. The learning model may be trained by using, as learning data, the cross-sectional images for the two or more directions (e.g., the x-axis direction and the y-axis direction) generated based on a 3D image.

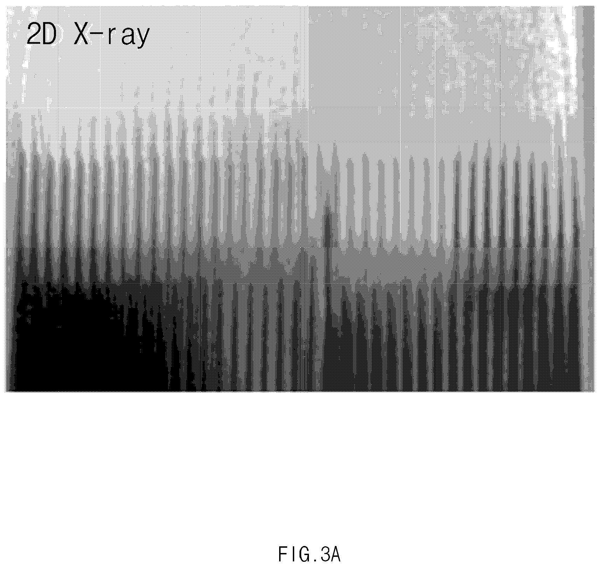

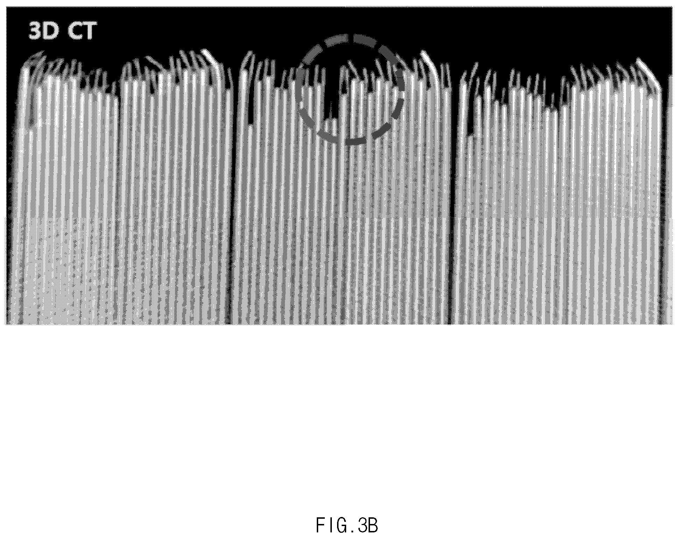

FIG. 3A shows a 2D image of a battery cell internal electrode, obtained through radiography, and FIG. 3B shows a cross-sectional image generated based on a 3D image of a battery cell internal electrode, obtained through radiography. For the 2D image shown in FIG. 3A, the electrode is not clearly distinguished due to low resolution, making it difficult to track the electrode endpoint. On the other hand, by obtaining the 3D image, a high-resolution cross-sectional image may be obtained as shown in FIG. 3B, and the accuracy of endpoint tracking may be improved through cross-sectional inspection for the two or more directions (e.g., the x-axis direction and the y-axis direction).

The controller 320 determines whether an electrode is defective, by using electrode tracking coordinates. According to an embodiment, in at least one of a case where some positive electrode or negative electrode is bent, a case where some positive electrode or negative electrode is missing, a case where a gap between endpoints of adjacent positive electrode and negative electrode is equal to or greater than a reference value, a case where an insertion order of a positive electrode or a negative electrode is reversed, a case where a gap between endpoints of adjacent positive electrodes or a gap between endpoints of adjacent negative electrodes is equal to or greater than a reference value, a case where a parameter indicating an alignment state of a positive electrode and a negative electrode in a specific section is equal to or less than a reference value, and a case where some positive electrode or negative electrode is disconnected, the controller 320 may determine that an electrode of the battery cell is defective.

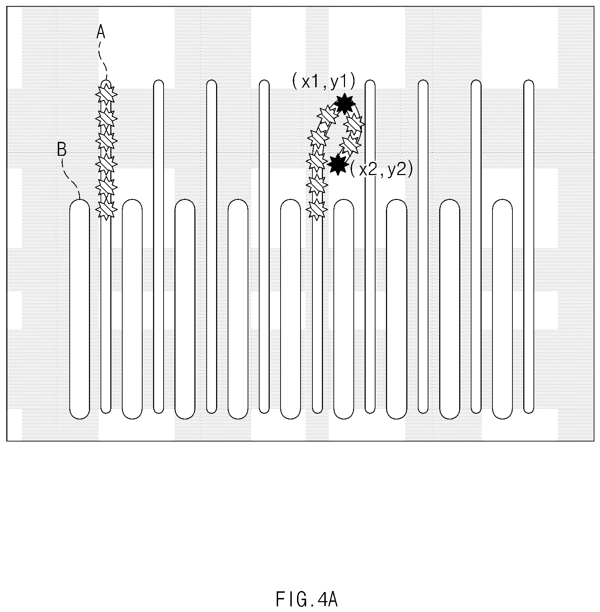

FIGS. 4A to 4G are schematic diagrams of an electrode cross-sectional image of a battery cell, respectively showing cases where an electrode may be determined to be defective.

FIG. 4A shows a case where some negative electrode A is bent in an electrode structure where the negative electrode A and a positive electrode B are alternately stacked. The controller 320 may track endpoint coordinates (x1, y1) and (x2, y2) of a negative electrode by using a learning model, and calculate how much the negative electrode A is bent, based on coordinate information. For example, when endpoint coordinates of a negative electrode satisfy the following equation, it may be determined that excessive deformation occurs in the negative electrode. Herein, reference values X_{ref} and Y_{ref} for determining a defect may be set arbitrarily.$\left|x1-x2\right| > {X}_{ref} or \left|y1-y2\right| > {Y}_{ref}$

Alternatively, when tracked points along a negative electrode are sequentially aligned for each position, a negative electrode may be estimated as being bent for the greatest value y of intermediate coordinates. As such, when the negative electrode is bent, a circuit may be short-circuited due to contact with another electrode, such that the corresponding battery cell may be determined to be defective.

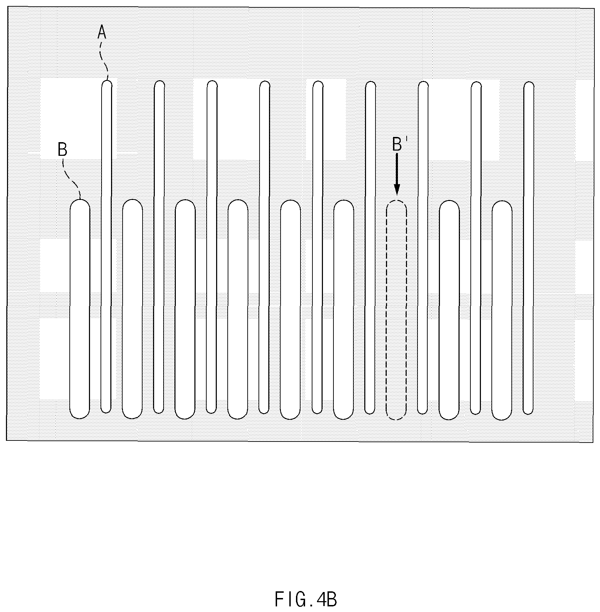

FIG. 4B shows a case where some positive electrode B' is missing in an electrode structure where the negative electrode A and the positive electrode B are alternately stacked. The controller 320 may inspect the number of positive electrode and negative electrode stacks by tracking an electrode endpoint, in which when the inspected number of stacks is not equal to a designated number, the controller 320 may determine that some electrode is missing. In this case, the circuit may be short-circuited due to contact between negative electrodes or positive electrodes, such that the controller 320 may determine that the corresponding battery cell is defective.

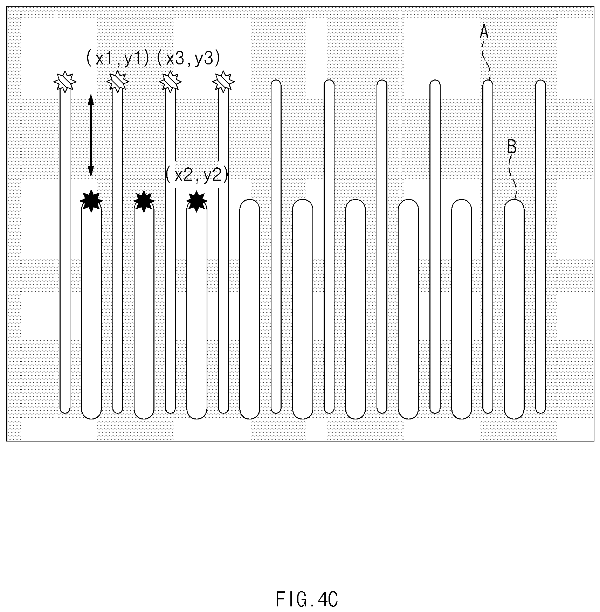

FIG. 4C shows a case where a gap between endpoints of the adjacent negative electrode A and positive electrode B is equal to or greater than a reference value in an electrode structure where the negative electrode A and the positive electrode B are alternately stacked. The controller 320 may track negative electrode endpoint coordinates (x1, y1) and (x3, y3) and positive electrode endpoint coordinates (x2, y2) by using the learning model, and measure a size of a gap between electrodes based on coordinate information. When the size of the gap is equal to or greater than a reference value, a circuit is likely to be short-circuited due to bending of an electrode and contact between electrodes, such that the controller 320 may determine that the corresponding battery cell is defective.

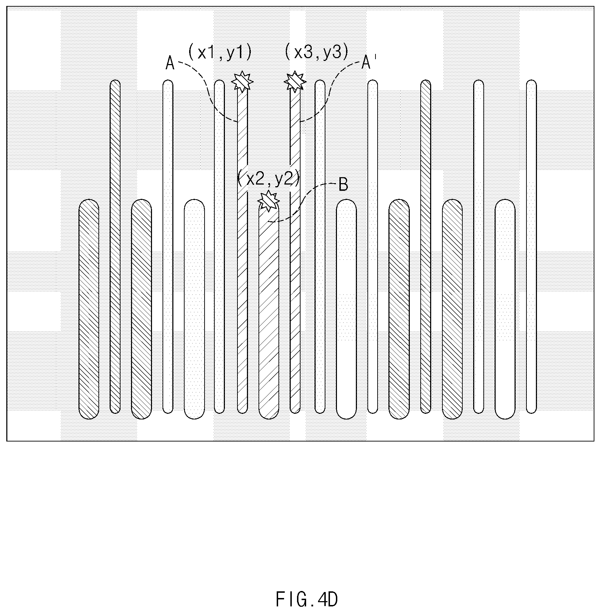

FIG. 4D shows a case where an insertion order of a positive electrode or a negative electrode is reversed in a structure where a negative electrode and a positive electrode are stacked alternately. Positive electrodes have to be inserted at positions A and A' and negative electrodes have to be inserted at a position B in a normal case, but when a negative electrode is inserted in place of a positive electrode and a positive electrode is inserted in place of a negative electrode as shown in FIG. 4D, a corresponding battery cell may be determined to be defective. For example, the controller 320 may track endpoint coordinates (x1, y1), (x2, y2), and (x3, y3) of three consecutive electrodes according to a Bi-cell sequence, compare heights (y1, y2, y3) of the respective end points, and determine that a corresponding cell is defective due to fault insertion of the Bi-cell when y1 and y3 are higher than y2. Alternatively, as a result of tracking a height of each electrode, when high electrodes are consecutive or low electrodes are consecutive without repetition of the high electrodes and the low electrodes, a corresponding cell may be determined to be defective.

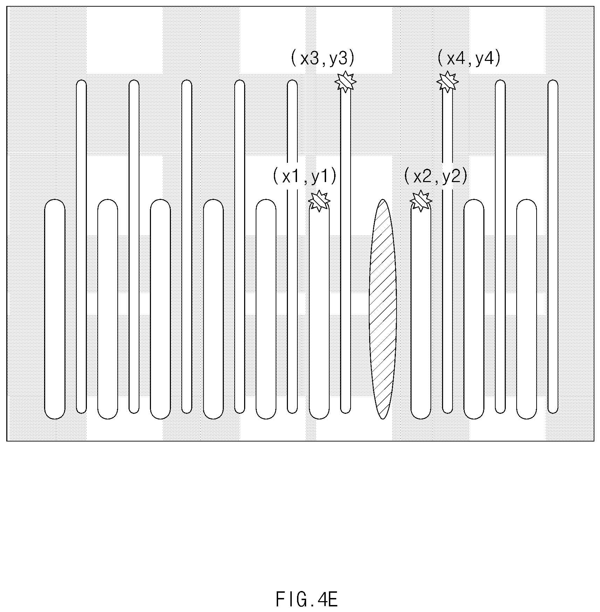

FIG. 4E shows a case where a gap between endpoints of adjacent electrodes is equal to or greater than a reference value due to introduction of a foreign substance (e.g., a tape, a scrap, etc.) between a positive electrode/a negative electrode or folding of a separator, in a structure where the negative electrode and the positive electrode are stacked alternately. For example, the controller 320 may determine that a defect occurs when the following equation is satisfied for end point coordinates (xn, yn) of a positive electrode or a negative electrode. Herein, a reference value X_{ref} may be set at random.$\left|{x}_{n + 1}-{x}_{n}\right| > {X}_{ref}$

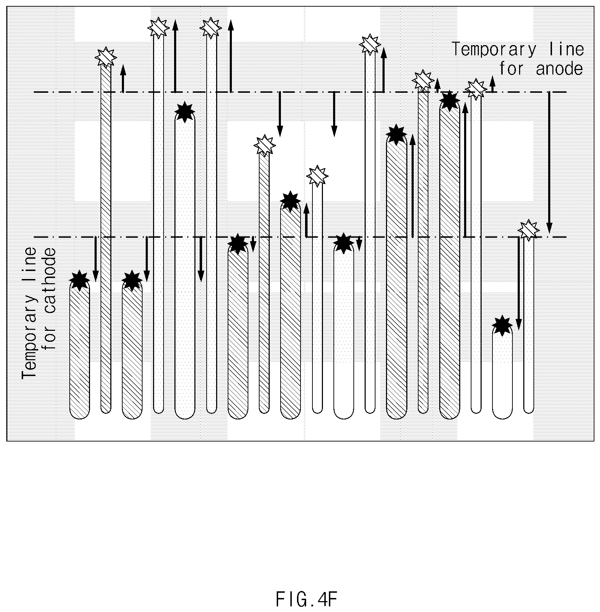

FIG. 4F shows a case where a parameter indicating an alignment state of a positive electrode and a negative electrode in a specific section is less than or equal to a reference value. This is a case where an AC overhang does not occur, but high variability occurs due to a poor alignment state of the positive electrode and the negative electrode. In this case, the controller 320 may set temporary lines indicating alignment criteria for a positive electrode and a negative electrode and set a difference from the temporary lines as a parameter for each positive electrode/negative electrode. For example, when the temporary line for a positive electrode or a negative electrode is set as AVG, the controller 320 may determine that a defect occurs when the following equation is satisfied for end point coordinates (xn, yn) of a positive electrode or a negative electrode. Herein, the reference value Y_{ref} may be set for each positive electrode/negative electrode.$\left|{y}_{n}-AVG\right| > {Y}_{ref}$

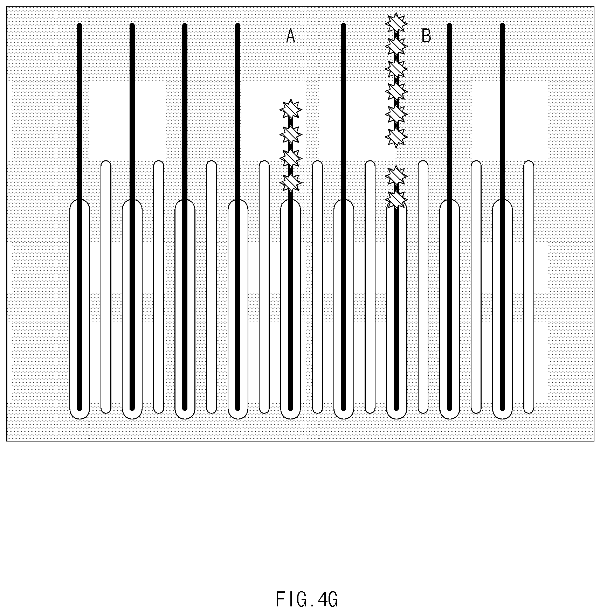

FIG. 4G shows a case where some positive electrode or negative electrode is disconnected. Referring to FIG. 4G, A indicates a case where an electrode is fully disconnected and B indicates an electrode is partially disconnected. The controller 320 determines that an electrode is fully disconnected when an electrode length tracked from an electrode bottom is shorter than that of an adjacent electrode, and determines that an electrode is partially disconnected when tracking is interrupted around a tab. When the tab is disconnected in this way, safety is degraded, determining that a battery cell is defective.

While a description has been made of a case where an electrode defect is determined, with reference to FIGS. 4A to 4G, this is merely an example and various cases for determining a defect based on electrode endpoint coordinates may be added as embodiments.

According to an embodiment, the controller 320 may determine whether an electrode is defective based on a rule-based algorithm together with an artificial intelligence learning model or separately. With the rule-based algorithm, a user determines a defect for an input electrode image according to a predetermined rule. This scheme may automatically determine a defect without a separate machine learning process, but the accuracy thereof may be degraded due to a non-uniform shape of the electrode of the battery cell. Thus, it is desirable to apply the deep learning-based learning model and the rule-based algorithm at the same time to complement each other.

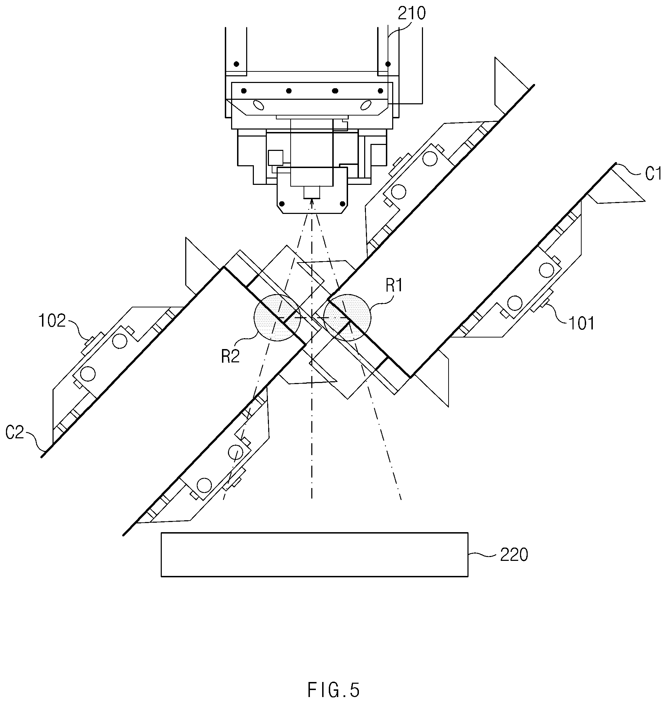

FIG. 5 shows arrangement structures and a tray and a battery cell to simultaneously inspect multiple battery cells. As shown in FIG. 1, the transferring unit 110 may simultaneously transfer the two or more trays 101 and 102 to the photographing point. The two or more battery cells C1 and C2 may be respectively loaded on the trays 101 and 102.

According to an embodiment, the trays 101 and 102 transferred from the photographing point may be arranged to allow radiation output from the radiation source 210 to penetrate the regions of interest R1 and R2 of the battery cells C1 and C2 loaded on all the trays 101 and 102. For example, as shown in FIG. 5, corners of the battery cells C1 loaded on the tray 101 may face corners of the battery cells C2 loaded on another tray 102. Radiation penetrating the regions of interest R1 and R2 of the battery cells may be detected by the radiation detector 220, and the inspection unit 200 may obtain electrode images for the multiple battery cells C1 and C2 by using the information. As such, by simultaneously inspecting several battery cells, a time required for inspection may be greatly reduced.

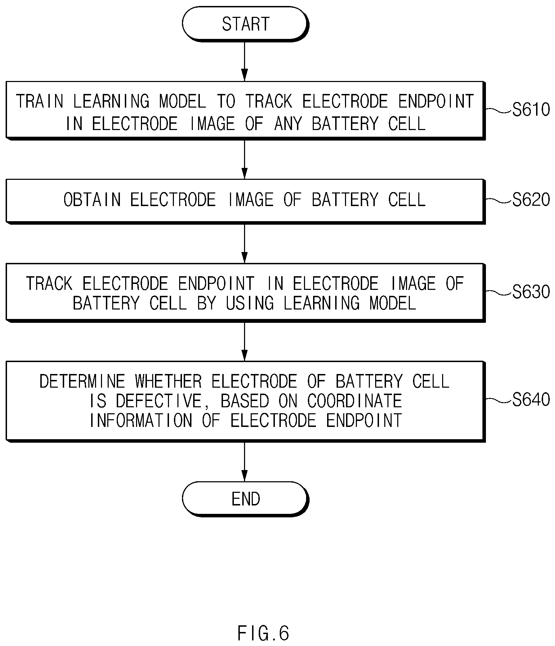

FIG. 6 is a flowchart showing a battery cell inspection method according to an embodiment. Referring to FIG. 6, operation S610 of training a learning model to track an electrode endpoint in an electrode image of a battery cell may be performed. According to an embodiment, the learning model may be generated and trained using a segment labelling scheme. A process of generating and training the learning model is described and thus will not be described in detail. The learning model may be stored in the memory 310 of the inspection unit 300.

Next, operation S620 of obtaining the electrode image of the battery cell may be performed. Operation S620 may be performed by the photographing unit 200 including the radiation source 210 that outputs radiation (e.g., X rays) toward a region of interest (ROI) of the battery cell and the radiation detector 220 that detects radiation penetrating the region of interest, as shown in FIG. 1. According to an embodiment, operation S620 may include an operation of outputting radiation toward a region of interest of the battery cell by using the radiation source 210 and an operation of detecting radiation penetrating the region of interest of the battery cell by using the radiation detector 220.

Next, operation S630 of tracking an electrode endpoint in the electrode image of the battery cell by using the learning model may be performed. Operation S630 may be performed by the controller 320 included in the inspection unit 300. According to an embodiment, the controller 320 may generate cross-sectional images for two or more directions (e.g., an x-axis direction cross-sectional image and a y-axis direction cross-sectional image) based on the 3D image, and track an electrode endpoint for each cross-sectional image by using a learning model trained based on three-dimensional image data.

Next, operation S640 of determining whether an electrode of the battery cell is defective, based on coordinate information of the electrode endpoint may be performed. Operation S640 may be performed by the controller 320. The electrode of the battery cell may be determined to be defective in at least one of a case where some positive electrode or negative electrode is bent, a case where some positive electrode or negative electrode is missing, a case where a gap between endpoints of adjacent positive electrode and negative electrode is equal to or greater than a reference value, a case where an insertion order of a positive electrode or a negative electrode is reversed, a case where a gap between endpoints of adjacent positive electrodes or a gap between endpoints of adjacent negative electrodes is equal to or greater than a reference value, a case where a parameter indicating an alignment state of a positive electrode and a negative electrode in a specific section is equal to or less than a reference value, and a case where some positive electrode or negative electrode is disconnected (see FIGS. 4A to 4G).

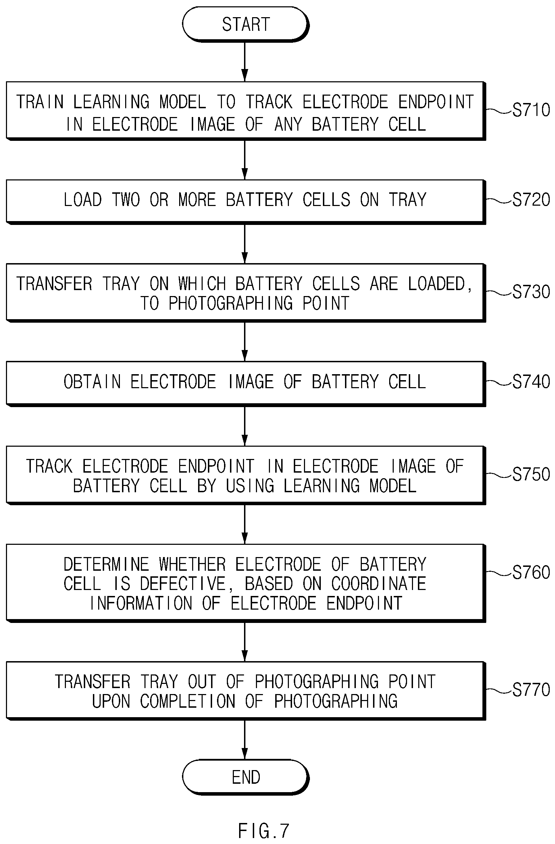

FIG. 7 is a flowchart showing a battery cell inspection method according to another embodiment. Referring to FIG. 7, operation S710 of training a learning model to track an electrode endpoint in an electrode image of a battery cell may be performed. Operation S710 is substantially the same as operation S610 described with reference to FIG. 6, and thus will not be described in detail.

Next, operation S720 of loading two or more battery cells on a tray and operation S730 of transferring the tray on which the battery cells are loaded, to a photographing point, may be performed. As described with reference to FIG. 1, the two or more battery cells C1 and C2 may be respectively loaded on the trays 101 and 102. To inspect corner portions of the several battery cells C1 and C2 at the same time, the battery cells may be loaded exactly on top of each other.

Next, operation S740 of obtaining the electrode image of the battery cell, operation S750 of tracking an electrode endpoint in the electrode image of the battery cell by using the learning model, and operation S760 of determining whether the electrode of the battery cell is defective based on coordinate information of the electrode endpoint may be sequentially performed. Operations S740 to S760 are substantially the same as operations S620 to S640 described with reference to FIG. 6, and thus will not be described in detail.

Upon completion of photographing of the electrode, operation S770 of transferring the tray out of the photographing point may be performed. Operation S770 may be performed at any point in time after operation S740 of obtaining the image of the electrode is finished. Operations S730 and S770 of transferring the battery cell and the tray may be performed by the transferring unit 110 (see FIG. 1).

According to an embodiment, to obtain a three-dimensional image of the battery cell, an operation of rotating, by the transferring unit 110, the tray on which the battery cells are loaded with respect to an axis in the photographing point may be further performed, and in this case, the photographing unit 200 may further perform an operation of obtaining the three-dimensional image of the battery cell based on the two-dimensional radiographic image obtained during rotation of the tray.

At least some operation of the battery cell inspection method according to the embodiments may be implemented in the form of an application or a program instruction that is executable through various computer components and recorded in a computer-readable recording medium. The computer-readable recording medium may include a program instruction, a data file, a data structure and the like solely or in combination.

According to the above-described embodiments of the battery cell inspection system and method, an electrode endpoint may be tracked in a battery cell image by using an artificial intelligence learning model and whether an electrode is defective may be automatically determined based thereon. Moreover, by simultaneously obtaining electrode images of several stacked battery cells and automatically inspecting an electrode of each battery cell by using a learning model, a time required for inspection may be largely reduced. Thus, unlike existing sampling inspection, total inspection may be possible and thus a risk corresponding to a defect of a product may be greatly reduced.

So far, all components constituting the embodiment have been described as being combined or operating in combination, but it is not necessarily limited to this embodiment, and within the scope of the purpose, all components may be selectively combined with one or more to operate. Moreover, terms such as "include", "constitute", "have", etc., described above may mean that the corresponding component may be inherent unless otherwise stated, and thus should be construed as further including other components rather than excluding other components.

### Description of the symbols

C1, C2: Battery Cells
101, 102: Tray
110: Transferring Unit
200: Photographing Unit
210: Radiation Source
220: Radiation Detector
300: Inspection Unit
310: Memory
320: Controller

## Claims

1. A battery cell (C1, C2) inspection system comprising:
a photographing unit (200) configured to obtain an electrode image of a battery cell;
a memory (310) storing a learning model trained to track an electrode endpoint in an electrode image of a battery cell; and
a controller (320) configured to track the electrode endpoint in the electrode image of the battery cell by using the learning model, and determine whether an electrode of the battery cell is defective, based on coordinate information of the electrode endpoint,
wherein the photographing unit comprises:
a radiation source (210) configured to output radiation toward a region of interest (ROI) of the battery cell; and
a radiation detector (220) configured to detect radiation penetrating the region of interest of the battery cell.

2. The battery cell inspection system of claim 1, wherein the learning model is generated by receiving learning data comprising an electrode image of a battery cell, labelling the learning data, extracting a feature based on the labelled learning data, and structurizing a database where the feature is recorded.

3. The battery cell inspection system of claim 1, wherein the photographing unit is further configured to obtain a three-dimensional image for the region of interest of the battery cell, and
the controller is further configured to generate cross-sectional images for two or more directions based on the three-dimensional image and track an electrode endpoint of the battery cell for each of the cross-sectional images, and
the learning model is trained using cross-sectional images for two or more directions, generated based on a three-dimensional image, as learning data.

4. The battery cell inspection system of claim 1, wherein an electrode of the battery cell comprises a structure where a plurality of positive electrodes and a plurality of negative electrodes are alternately stacked with a separator therebetween, and
the controller is further configured to determine that the electrode of the battery cell is defective, in at least one of a case where some positive electrode or negative electrode is bent, a case where some positive electrode or negative electrode is missing, a case where a gap between endpoints of adjacent positive electrode and negative electrode is equal to or greater than a reference value, a case where an insertion order of a positive electrode or a negative electrode is reversed, a case where a gap between endpoints of adjacent positive electrodes or a gap between endpoints of adj acent negative electrodes is equal to or greater than a reference value, a case where a parameter indicating an alignment state of a positive electrode and a negative electrode in a specific section is equal to or less than a reference value, and a case where some positive electrode or negative electrode is disconnected.

5. The battery cell inspection system of claim 1, further comprising:
a tray (101, 102) on which two or more battery cells are loaded; and
a transferring unit (110) configured to transfer the tray on which the battery cells are loaded, to a photographing point of the photographing unit and transfer the tray out of the photographing point upon completion of photographing.

6. The battery cell inspection system of claim 5, wherein the transferring unit is further configured to simultaneously transfer two or more trays on which the battery cells are loaded, to the photographing point, and
the two or more trays are arranged such that the radiation output from the radiation source penetrates regions of interest of the battery cells loaded on all of the trays at the same time.

7. The battery cell inspection system of claim 6, wherein the two or more trays are arranged such that corners of the battery cells loaded on each tray face corners of the battery cells loaded on another tray, in the photographing point.

8. The battery cell inspection system of claim 5, wherein the transferring unit is further configured to rotate the tray on which the battery cells are loaded, with respect to an axis in the photographing point, and
the photographing unit is further configured to obtain a three-dimensional image of the battery cell based on a two-dimensional radiation image obtained during rotation of the tray.

9. A battery cell inspection method comprising:
training a learning model to track an electrode endpoint in an electrode image of a battery cell;
obtaining, through radiography, an electrode image of the battery cell;
tracking the electrode endpoint in the electrode image of the battery cell by using the learning model; and
determining whether an electrode of the battery cell is defective, based on coordinate information of the electrode endpoint.

10. The battery cell inspection method of claim 9, wherein the learning model is generated by receiving learning data comprising an electrode image of a battery cell, labelling the learning data, extracting a feature based on the labelled learning data, and structurizing a database where the feature is recorded.

11. The battery cell inspection method of claim 9, wherein the obtaining of the electrode image of the battery cell comprises:
outputting radiation toward a region of interest of the battery cell; and
detecting radiation penetrating the region of interest of the battery cell.

12. The battery cell inspection method of claim 11, wherein the obtaining of the electrode image of the battery cell comprises obtaining a three-dimensional image for the region of interest of the battery cell, and
the tracking of the electrode endpoint of the battery cell comprises generating cross-sectional images for two or more directions based on the three-dimensional image and tracking the electrode endpoint of the battery cell for each of the cross-sectional images, and
the learning model is trained using cross-sectional images for two or more directions, generated based on a three-dimensional image, as learning data.

13. The battery cell inspection method of claim 9, wherein an electrode of the battery cell comprises a structure where a plurality of positive electrodes and a plurality of negative electrodes are alternately stacked with a separator therebetween, and
the battery cell inspection method further comprises determining that the electrode of the battery cell is defective, in at least one of a case where some positive electrode or negative electrode is bent, a case where some positive electrode or negative electrode is missing, a case where a gap between endpoints of adjacent positive electrode and negative electrode is equal to or greater than a reference value, a case where an insertion order of a positive electrode or a negative electrode is reversed, a case where a gap between endpoints of adjacent positive electrodes or a gap between endpoints of adjacent negative electrodes is equal to or greater than a reference value, a case where a parameter indicating an alignment state of a positive electrode and a negative electrode in a specific section is equal to or less than a reference value, and a case where some positive electrode or negative electrode is disconnected.

14. The battery cell inspection method of claim 11, further comprising:
loading two or more battery cells on a tray;
transferring the tray on which the battery cells are loaded, to a photographing point; and
transferring the tray out of the photographing point upon completion of photographing.

## Patentansprüche

1. Inspektionssystem für Batteriezellen (C1, C2), umfassend:
eine Bildaufnahmeeinheit (200), die konfiguriert ist, um ein Elektrodenbild einer Batteriezelle zu erhalten;
einen Speicher (310), der ein Lernmodell speichert, das trainiert ist, um einen Elektrodenendpunkt in einem Elektrodenbild einer Batteriezelle zu verfolgen; und
eine Steuerung (320), die konfiguriert ist, um den Elektrodenendpunkt in dem Elektrodenbild der Batteriezelle unter Verwendung des Lernmodells zu verfolgen und
auf der Grundlage von Koordinateninformationen des Elektrodenendpunkts zu bestimmen, ob eine Elektrode der Batteriezelle defekt ist,
wobei die Bildaufnahmeeinheit umfasst:
eine Strahlungsquelle (210), die konfiguriert ist, um Strahlung in Richtung eines interessierenden Bereichs (ROI) der Batteriezelle auszugeben; und
einen Strahlungsdetektor (220), der konfiguriert ist, um Strahlung zu detektieren, die den interessierenden Bereich der Batteriezelle durchdringt.

2. Inspektionssystem für Batteriezellen nach Anspruch 1, wobei das Lernmodelldurch Empfangen von Lerndaten, die ein Elektrodenbild einer Batteriezelle umfassen, Kennzeichnen der Lerndaten, Extrahieren eines Merkmals auf der Grundlage der gekennzeichneten Lerndaten und Strukturieren einer Datenbank, in der das Merkmal aufgezeichnet wird, erzeugt wird.

3. Inspektionssystem für Batteriezellen nach Anspruch 1, wobei die Bildaufnahmeeinheit ferner konfiguriert ist, um ein dreidimensionales Bild für den interessierenden Bereich der Batteriezelle zu erhalten, und
die Steuerung ferner konfiguriert ist, um Querschnittsbilder für zwei oder mehr Richtungen auf der Grundlage des dreidimensionalen Bildes zu erzeugen und einen Elektrodenendpunkt der Batteriezelle für jedes der Querschnittsbilder zu verfolgen, und
das Lernmodell unter Verwendung von Querschnittsbildern für zwei oder mehr Richtungen, die auf der Grundlage eines dreidimensionalen Bildes erzeugt werden, als Lerndaten trainiert wird.

4. Inspektionssystem für Batteriezellen nach Anspruch 1, wobei eine Elektrode der Batteriezelle eine Struktur umfasst, bei der eine Vielzahl von positiven Elektroden und eine Vielzahl von negativen Elektroden abwechselnd mit einem dazwischen liegenden Separator gestapelt sind, und
die Steuerung ferner konfiguriert ist, um zu bestimmen, dass die Elektrode der Batteriezelle defekt ist, in mindestens einem Fall, in dem eine positive Elektrode oder eine negative Elektrode gebogen ist, einem Fall, in dem eine positive Elektrode oder eine negative Elektrode fehlt, einem Fall, in dem ein Spalt zwischen den Endpunkten einer benachbarten positiven Elektrode und einer negativen Elektrode gleich oder größer als ein Referenzwert ist, einem Fall, in dem eine Einfügungsreihenfolge einer positiven Elektrode oder einer negativen Elektrode umgekehrt ist, einem Fall, in dem ein Spalt zwischen den Endpunkten benachbarter positiver Elektroden oder ein Spalt zwischen den Endpunkten benachbarter negativer Elektroden gleich oder größer als ein Referenzwert ist, einem Fall, in dem ein Parameter, der einen Ausrichtungszustand einer positiven Elektrode und einer negativen Elektrode in einem bestimmten Abschnitt anzeigt, gleich oder kleiner als ein Referenzwert ist, und einem Fall, in dem eine positive Elektrode oder eine negative Elektrode getrennt ist.

5. Inspektionssystem für Batteriezellen nach Anspruch 1, ferner umfassend:
ein Tablett (101, 102), auf das zwei oder mehr Batteriezellen geladen sind; und
eine Fördereinheit (110), die konfiguriert ist, um das Tablett, auf das die Batteriezellen geladen sind, zu einem Bildaufnahmepunkt der Bildaufnahmeeinheit zu befördern und das Tablett nach Abschluss der Bildaufnahme von dem Bildaufnahmepunkt weg zu befördern.

6. Inspektionssystem für Batteriezellen nach Anspruch 5, wobei die Fördereinheit ferner konfiguriert ist, um gleichzeitig zwei oder mehr Tabletts, auf denen die Batteriezellen geladen sind, zum Bildaufnahmepunkt zu befördern, und
die zwei oder mehr Tabletts so angeordnet sind, dass die von der Strahlungsquelle ausgegebene Strahlung gleichzeitig die interessierenden Bereiche der auf allen Tabletts geladenen Batteriezellen durchdringt.

7. Inspektionssystem für Batteriezellen nach Anspruch 6, wobei die zwei oder mehr Tabletts so angeordnet sind, dass die Ecken der auf jedem Tablett geladenen Batteriezellen den Ecken der auf einem anderen Tablett geladenen Batteriezellen im Bildaufnahmepunkt zugewandt sind.

8. Inspektionssystem für Batteriezellen nach Anspruch 5, wobei die Fördereinheit ferner konfiguriert ist, um das Tablett, auf das die Batteriezellen geladen sind, in Bezug auf eine Achse im Bildaufnahmepunkt zu drehen, und
die Bildaufnahmeeinheit ferner konfiguriert ist, um ein dreidimensionales Bild der Batteriezelle auf der Grundlage eines zweidimensionalen Strahlungsbildes zu erhalten, das während der Drehung des Tabletts erhalten wird.

9. Inspektionsverfahren für Batteriezellen, umfassend:
Trainieren eines Lernmodells zum Verfolgen eines Elektrodenendpunkts in einem Elektrodenbild einer Batteriezelle;
Erhalten eines Elektrodenbildes der Batteriezelle durch Radiographie;
Verfolgen des Elektrodenendpunkts in dem Elektrodenbild der Batteriezelle unter Verwendung des Lernmodells; und
Bestimmen, ob eine Elektrode der Batteriezelle defekt ist, auf der Grundlage von Koordinateninformationen des Elektrodenendpunkts.

10. Inspektionsverfahren für Batteriezellen nach Anspruch 9, wobei das Lernmodell durch Empfangen von Lerndaten, die ein Elektrodenbild einer Batteriezelle umfassen, Kennzeichnen der Lerndaten, Extrahieren eines Merkmals auf der Grundlage der gekennzeichneten Lerndaten und Strukturieren einer Datenbank, in der das Merkmal aufgezeichnet wird, erzeugt wird.

11. Inspektionsverfahren für Batteriezellen nach Anspruch 9, wobei das Erhalten des Elektrodenbildes der Batteriezelle umfasst:
Ausgeben von Strahlung in Richtung eines interessierenden Bereichs der Batteriezelle; und
Detektieren von Strahlung, die den interessierenden Bereich der Batteriezelle durchdringt.

12. Inspektionsverfahren für Batteriezellen nach Anspruch 11, wobei das Erhalten des Elektrodenbildes der Batteriezelle das Erhalten eines dreidimensionalen Bildes für den interessierenden Bereich der Batteriezelle umfasst, und
das Verfolgen des Elektrodenendpunkts der Batteriezelle das Erzeugen von Querschnittsbildern für zwei oder mehr Richtungen auf der Grundlage des dreidimensionalen Bildes und das Verfolgen des Elektrodenendpunkts der Batteriezelle für jedes der Querschnittsbilder umfasst, und
das Lernmodell unter Verwendung von Querschnittsbildern für zwei oder mehr Richtungen, die auf der Grundlage eines dreidimensionalen Bildes erzeugt werden, als Lerndaten trainiert wird.

13. Inspektionsverfahren für Batteriezellen nach Anspruch 9, wobei eine Elektrode der Batteriezelle eine Struktur umfasst, bei der eine Vielzahl von positiven Elektroden und eine Vielzahl von negativen Elektroden abwechselnd mit einem dazwischen liegenden Separator gestapelt sind, und
das Inspektionsverfahren für Batteriezellen ferner das Bestimmen umfasst, dass die Elektrode der Batteriezelle defekt ist, in mindestens einem Fall, in dem eine positive Elektrode oder eine negative Elektrode gebogen ist, einem Fall, in dem eine positive Elektrode oder eine negative Elektrode fehlt, einem Fall, in dem ein Spalt zwischen den Endpunkten einer benachbarten positiven Elektrode und einer negativen Elektrode gleich oder größer als ein Referenzwert ist, einem Fall, in dem eine Einfügungsreihenfolge einer positiven Elektrode oder einer negativen Elektrode umgekehrt ist, einem Fall, in dem ein Spalt zwischen den Endpunkten benachbarter positiver Elektroden oder ein Spalt zwischen den Endpunkten benachbarter negativer Elektroden gleich oder größer als ein Referenzwert ist, einem Fall, in dem ein Parameter, der einen Ausrichtungszustand einer positiven Elektrode und einer negativen Elektrode in einem bestimmten Abschnitt anzeigt, gleich oder kleiner als ein Referenzwert ist, und einem Fall, in dem eine positive Elektrode oder eine negative Elektrode getrennt ist.

14. Inspektionsverfahren für Batteriezellen nach Anspruch 11, ferner umfassend:
Laden von zwei oder mehr Batteriezellen auf ein Tablett;
Befördern des Tabletts, auf das die Batteriezellen geladen sind, zu einem Bildaufnahmepunkt; und
Befördern des Tabletts weg von dem Bildaufnahmepunkt nach Abschluss der Bildaufnahme.

## Revendications

1. Système d'inspection de cellule de batterie (C1, C2) comprenant :
une unité de photographie (200) configurée pour obtenir une image d'électrode d'une cellule de batterie ;
une mémoire (310) stockant un modèle d'apprentissage entraîné pour suivre un point d'extrémité d'électrode dans une image d'électrode d'une cellule de batterie ; et
un contrôleur (320) configuré pour suivre le point d'extrémité d'électrode dans l'image d'électrode de la cellule de batterie en utilisant le modèle d'apprentissage, et déterminer si une électrode de la cellule de batterie est défectueuse, sur la base d'informations de coordonnées du point d'extrémité d'électrode,
dans lequel l'unité de photographie comprend :
une source de rayonnement (210) configurée pour émettre un rayonnement vers une région d'intérêt (ROI) de la cellule de batterie ; et
un détecteur de rayonnement (220) configuré pour détecter le rayonnement pénétrant la région d'intérêt de la cellule de batterie.

2. Système d'inspection de cellule de batterie selon la revendication 1, dans lequel le modèle d'apprentissage est généré en recevant des données d'apprentissage comprenant une image d'électrode d'une cellule de batterie, en étiquetant les données d'apprentissage, en extrayant une caractéristique sur la base des données d'apprentissage étiquetées, et en structurant une base de données où la caractéristique est enregistrée.

3. Système d'inspection de cellule de batterie selon la revendication 1, dans lequel l'unité de photographie est en outre configurée pour obtenir une image tridimensionnelle pour la région d'intérêt de la cellule de batterie, et
le contrôleur est en outre configuré pour générer des images en coupe transversale pour deux directions ou plus sur la base de l'image tridimensionnelle et pour suivre un point d'extrémité d'électrode de la cellule de batterie pour chacune des images en coupe transversale, et
le modèle d'apprentissage est entraîné en utilisant des images en coupe transversale pour deux directions ou plus, générées sur la base d'une image tridimensionnelle, en tant que données d'apprentissage.

4. Système d'inspection de cellule de batterie selon la revendication 1, dans lequel une électrode de la cellule de batterie comprend une structure où une pluralité d'électrodes positives et une pluralité d'électrodes négatives sont empilées en alternance avec un séparateur entre elles, et
le contrôleur est en outre configuré pour déterminer que l'électrode de la cellule de batterie est défectueuse, dans au moins l'un d'un cas où une électrode positive ou une électrode négative est pliée, un cas où une électrode positive ou une électrode négative est manquante, un cas où un espace entre les points d'extrémité d'une électrode positive et d'une électrode négative adjacentes est égal ou supérieur à une valeur de référence, un cas où un ordre d'insertion d'une électrode positive ou d'une électrode négative est inversé, un cas où un espace entre les points d'extrémité d'électrodes positives adjacentes ou un espace entre les points d'extrémité d'électrodes négatives adjacentes est égal ou supérieur à une valeur de référence, un cas où un paramètre indiquant un état d'alignement d'une électrode positive et d'une électrode négative dans une section spécifique est égal ou inférieur à une valeur de référence, et un cas où une électrode positive ou une électrode négative est déconnectée.

5. Système d'inspection de cellule de batterie selon la revendication 1, comprenant en outre :
un plateau (101, 102) sur lequel deux cellules de batterie ou plus sont chargées ; et
une unité de transfert (110) configurée pour transférer le plateau sur lequel les cellules de batterie sont chargées, à un point de photographie de l'unité de photographie et pour transférer le plateau hors du point de photographie à l'achèvement de la photographie.

6. Système d'inspection de cellule de batterie selon la revendication 5, dans lequel l'unité de transfert est en outre configurée pour transférer simultanément deux plateaux ou plus sur lesquels les cellules de batterie sont chargées, au point de photographie, et
les deux plateaux ou plus sont agencés de telle sorte que le rayonnement émis par la source de rayonnement pénètre les régions d'intérêt des cellules de batterie chargées sur tous les plateaux en même temps.

7. Système d'inspection de cellule de batterie selon la revendication 6, dans lequel les deux plateaux ou plus sont agencés de telle sorte que les coins des cellules de batterie chargées sur chaque plateau font face aux coins des cellules de batterie chargées sur un autre plateau, dans le point de photographie.

8. Système d'inspection de cellule de batterie selon la revendication 5, dans lequel l'unité de transfert est en outre configurée pour faire tourner le plateau sur lequel les cellules de batterie sont chargées, par rapport à un axe dans le point de photographie, et
l'unité de photographie est en outre configurée pour obtenir une image tridimensionnelle de la cellule de batterie sur la base d'une image de rayonnement bidimensionnelle obtenue pendant la rotation du plateau.

9. Procédé d'inspection de cellule de batterie comprenant :
l'entraînement d'un modèle d'apprentissage pour suivre un point d'extrémité d'électrode dans une image d'électrode d'une cellule de batterie ;
l'obtention, par radiographie, d'une image d'électrode de la cellule de batterie ;
le suivi du point d'extrémité d'électrode dans l'image d'électrode de la cellule de batterie en utilisant le modèle d'apprentissage ; et
la détermination si une électrode de la cellule de batterie est défectueuse, sur la base d'informations de coordonnées du point d'extrémité d'électrode.

10. Procédé d'inspection de cellule de batterie selon la revendication 9, dans lequel le modèle d'apprentissage est généré en recevant des données d'apprentissage comprenant une image d'électrode d'une cellule de batterie, en étiquetant les données d'apprentissage, en extrayant une caractéristique sur la base des données d'apprentissage étiquetées, et en structurant une base de données où la caractéristique est enregistrée.

11. Procédé d'inspection de cellule de batterie selon la revendication 9, dans lequel l'obtention de l'image d'électrode de la cellule de batterie comprend :
l'émission d'un rayonnement vers une région d'intérêt de la cellule de batterie ; et
la détection du rayonnement pénétrant la région d'intérêt de la cellule de batterie.

12. Procédé d'inspection de cellule de batterie selon la revendication 11, dans lequel l'obtention de l'image d'électrode de la cellule de batterie comprend l'obtention d'une image tridimensionnelle pour la région d'intérêt de la cellule de batterie, et
le suivi du point d'extrémité d'électrode de la cellule de batterie comprend la génération d'images en coupe transversale pour deux directions ou plus sur la base de l'image tridimensionnelle et le suivi du point d'extrémité d'électrode de la cellule de batterie pour chacune des images en coupe transversale, et
le modèle d'apprentissage est entraîné en utilisant des images en coupe transversale pour deux directions ou plus, générées sur la base d'une image tridimensionnelle, en tant que données d'apprentissage.

13. Procédé d'inspection de cellule de batterie selon la revendication 9, dans lequel une électrode de la cellule de batterie comprend une structure où une pluralité d'électrodes positives et une pluralité d'électrodes négatives sont empilées en alternance avec un séparateur entre elles, et
le procédé d'inspection de cellule de batterie comprend en outre la détermination que l'électrode de la cellule de batterie est défectueuse, dans au moins l'un d'un cas où une électrode positive ou une électrode négative est pliée, un cas où une électrode positive ou une électrode négative est manquante, un cas où un espace entre les points d'extrémité d'une électrode positive et d'une électrode négative adjacentes est égal ou supérieur à une valeur de référence, un cas où un ordre d'insertion d'une électrode positive ou d'une électrode négative est inversé, un cas où un espace entre les points d'extrémité d'électrodes positives adjacentes ou un espace entre les points d'extrémité d'électrodes négatives adjacentes est égal ou supérieur à une valeur de référence, un cas où un paramètre indiquant un état d'alignement d'une électrode positive et d'une électrode négative dans une section spécifique est égal ou inférieur à une valeur de référence, et un cas où une électrode positive ou une électrode négative est déconnectée.

14. Procédé d'inspection de cellule de batterie selon la revendication 11, comprenant en outre :
le chargement de deux cellules de batterie ou plus sur un plateau ;
le transfert du plateau sur lequel les cellules de batterie sont chargées, à un point de photographie ; et
le transfert du plateau hors du point de photographie à l'achèvement de la photographie.
